# EUROPEAN PATENT SPECIFICATION

(11) **EP 2 765 753 B1**
(45) Date of publication and mention of the grant of the patent: **30.11.2016**
(21) Application number: 14154406.4
(22) Date of filing: 10.02.2014
(51) Int. Cl.: H04L 29/06, H04L 29/08, H04M 3/38, H04W 4/08, H04L 12/18, H04M 3/56

(54) **Management system, management method, and computer program product**
Verwaltungssystem, Verwaltungsverfahren und Computerprogrammprodukt
Système de gestion, procédé de gestion et produit de programme informatique

(30) Priority: 12.02.2013 JP 2013025002
(43) Date of publication of application: 13.08.2014
(73) Proprietor: Ricoh Company, Ltd., Tokyo 143-8555 (JP)
(72) Inventor: Akimoto, Yuya, Tokyo, 143-8555 (JP)
(74) Representative: Schwabe - Sandmair - Marx

(56) References cited:
- EP-A1- 2 493 143
- WO-A1-2012/014824
- WO-A2-2005/053323
- US-A1- 2012 311 052

## Description

### CROSS-REFERENCE TO RELATED APPLICATIONS

The present application claims priority to Japanese Patent Application No. 2013-025002 filed in Japan on February 12, 2013.

### BACKGROUND OF THE INVENTION

### 1. Field of the Invention

The present invention relates to a management system, a management method, and a computer program product.

### 2. Description of the Related Art

Terminal systems that enable communications among remote locations over communication networks such as the Internet are currently widely used. One example of such terminal systems is a conference system that enables teleconferencing. In a general conference system, a terminal in a conference room in which one party of a teleconference such as a participant captures and collects the image of and the voice in the conference room. The conference system then converts the image and the voice into digital data, and transmits the data to a counterpart terminal in a conference room where another party is. The conference system then displays the video on a display and outputs the voice to a speaker provided to the terminal in the counterpart conference room. In this manner, a conference can be held among remote locations in a way similar to an actual conference.

Known in such a terminal system is a technology for allowing a terminal to be registered as a destination for a communication so that a terminal to which a communication is to be established can be called easily. For example, Japanese Laid-open Patent Publication No. 2006-074453 discloses an invention of a video phone and a conference system that allow terminal information of each party to be registered when a conference is held for the first time so that the information can be used to call up each other in conferences held subsequently.

When such operations are performed during the initial settings upon introduction of the terminal system, when there are a large number of terminals, and when the terminals are managed by different administrators, for example, if security considerations and the like, e.g., whether or not a certain terminal should be permitted to be registered as a destination, need to be made at the same time, the operations of registering terminals as destinations have been cumbersome.

In consideration of the above, there is a need to provide a management system, a management method, and a computer program product that allow a terminal to be registered as a destination more smoothly.

EP 2 493 143 Al discloses an apparatus and corresponding method of controlling connection among terminals in which a database stores a table comprising information about a plurality of terminals which are capable for requesting video conference communication. A further database stores information about an identification of those terminals and associated password which allows access of the terminal to the transmission management system. A candidate list management database, which stores a candidate list management table stores, for each one of a plurality of request terminals capable of requesting for videoconference communication, the terminal ID of the request terminal, and one or more terminal IDs that are respectively assigned to candidate terminals that are previously registered for the request terminal.

WO 2005/053323 A2 discloses a groupware management system and corresponding method which allows a group owner or a group manager having administrator rights to edit the members of which a group of members is composed. When a member or guest is added to the group, they may get invitations requesting their participation in a group. Members who accept a group invitation request may receive access to activities, information, files, URLs or other data or data types that may be associated with the group

### SUMMARY OF THE INVENTION

It is an object of the present invention to at least partially solve the problems in the conventional technology.

According to the present invention, there is provided a management system for managing one or more terminals, the management system comprising: a storage unit configured to store therein the terminals so that each of the terminals and another terminal being specifiable as a destination of the each of the terminals are in an associated manner; an authenticating unit configured to perform authentication for establishing connection to the management system with identification information of a terminal or identification information of an administrator of a terminal; a communicating unit configured to cause a first terminal to transmit, to each of one or more second terminals other than the associated terminals stored in the storage unit, a request for approval to register the each of one or more second terminals as a destination of the first terminal; and a storage controlling unit configured to store, in the storage unit, each of the one or more second terminals as a terminal being specifiable as a destination in a manner associated with the first terminal, when the connection to the management system is established with the identification information of the terminal and an approving response to the request for approval is received, and also when the connection to the management system is established with the identification information of the administrator and no approving response to the approval request is received. The present invention also provides a managing method performed by a management system managing one or more terminals and comprising a storage unit that stores therein the terminals so that each of the terminals and another terminal being specifiable as a destination of the each of the terminals are in an associated manner, the managing method comprising: by an authenticating unit, performing authentication for establishing connection to the management system with identification information of a terminal or identification information of an administrator of a terminal; by a communicating unit, causing a first terminal to transmit, to each of one or more second terminals other than the associated terminals stored in the storage unit, a request for approval to register the each of one or more second terminals as a destination of the first terminal; and by a storage controlling unit, storing, in the storage unit, each of the one or more second terminals as a terminal being specifiable as a destination in a manner associated with the first terminal, when the connection to the management system is established with the identification information of the terminal and an approving response to the request for approval is received, and also when the connection to the management system is established with the identification information of the administrator and no approving response to the approval request is received.

The present invention also provides a computer program product comprising a non-transitory computer-usable medium having a computer program that causes a computer managing one or more terminals and including a storage unit configured to store therein the terminals so that each of the terminals and another terminal being specifiable as a destination of the each of the terminals are in an associated manner, to function as: an authenticating unit configured to perform authentication for establishing connection to the management system with identification information of a terminal or identification information of an administrator of a terminal; a communicating unit configured to cause a first terminal to transmit, to each of one or more second terminals other than the associated terminals stored in the storage unit, a request for approval to register the each of one or more second terminals as a destination of the first terminal; and a storage controlling unit configured to store, in the storage unit, each of the one or more second terminals as a terminal being specifiable as a destination in a manner associated with the first terminal, when the connection to the management system is established with the identification information of the terminal and an approving response to the request for approval is received, and also when the connection to the management system is established with the identification information of the administrator and no approving response to the approval request is received.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram for explaining an example of a configuration of a management system according to a first embodiment of the present invention;
FIG. 2 is a diagram for explaining an example of a terminal authentication management DB according to the first embodiment;
FIG. 3 is a diagram for explaining an example of a terminal management DB according to the first embodiment;
FIG. 4 is a diagram for explaining an example of a destination list management DB according to the first embodiment;
FIG. 5 is a diagram for explaining an example of an addition request management DB according to the first embodiment;
FIG. 6 is a diagram for explaining an example of an administrator DB according to the first embodiment;
FIG. 7 is a diagram for explaining an example of how a destination is registered when a terminal ID is used to log into the management system according to the first embodiment;
FIG. 8 is a diagram for explaining an example of how a destination is registered when an administrator ID is used to log into the management system according to the first embodiment (with approval);
FIG. 9 is a diagram for explaining an example of how a destination is registered when an administrator ID is used to log into the management system according to the first embodiment (with the approval omitted);
FIG. 10 is a flowchart for explaining a method of managing the management system according to the first embodiment;
FIG. 11 is a diagram of an example of an authentication screen in the management system according to the first embodiment;
FIG. 12 is a diagram of an example of an administrator registration screen in the management system according to the first embodiment;
FIG. 13 is a diagram of an example of a managed terminal list screen in the management system according to the first embodiment;
FIG. 14 is a diagram of an example of a managed terminal registration screen in the management system according to the first embodiment;
FIG. 15 is a diagram of an example of a destination terminal registration screen in the management system according to the first embodiment;
FIG. 16 is a flowchart for explaining a method for registering and deleting a terminal managed by the management system according to the first embodiment;
FIG. 17 is a flowchart for explaining a method for registering and deleting a destination of the terminal managed by the management system according to the first embodiment;
FIG. 18 is a diagram for explaining an example of a destination list approval management DB according to a second embodiment of the present invention; and
FIG. 19 is a diagram for explaining an example of a hardware configuration of a display
controlling apparatus and a terminal managing apparatus in the management system according to the first and the second embodiments.

### DETAILED DESCRIPTION OF THE PREFERRED EMBODIMENTS

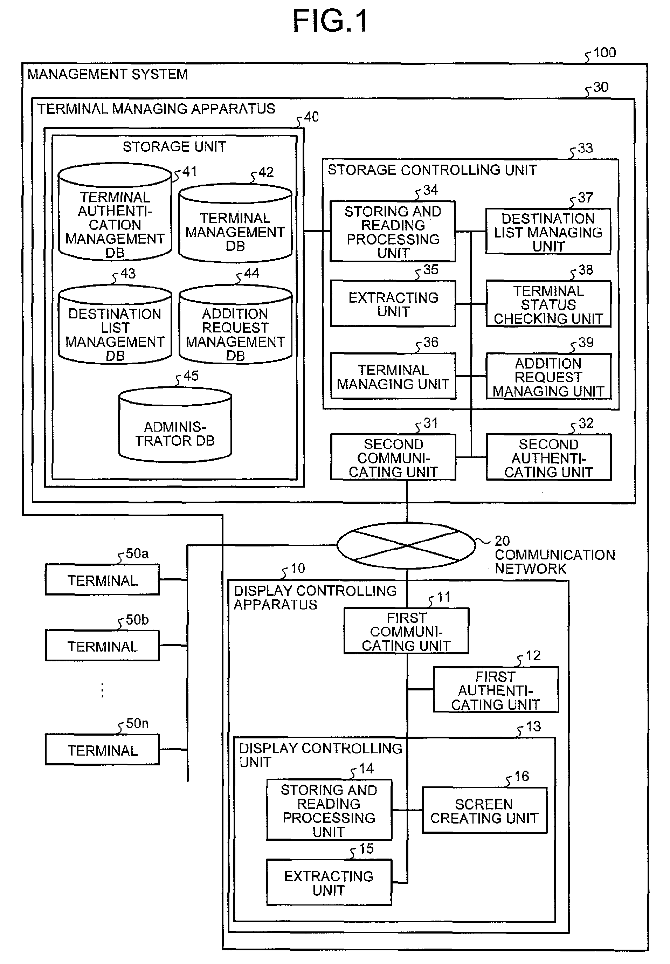

Some embodiments of the management system, the management method, and the computer program product according to the present invention will be now explained in detail with reference to the appended drawings. FIG. 1 is a diagram for explaining an example of a configuration of a management system 100 according to a first embodiment of the present invention.

### First Embodiment

The management system 100 includes a display controlling apparatus 10, a communication network 20, and a terminal managing apparatus 30. Terminals 50a to 50n are connected to the communication network 20. The number of the terminals 50a to 50n may be any number. Hereinafter, when each of the terminals 50a to 50n is not distinguished, the terminals 50a to 50n are generally referred to as terminals 50. The display controlling apparatus 10, the terminal managing apparatus 30, and the terminals 50 are connected to one another via the communication network 20. A connection system of the communication network 20 can be wired or wireless.

First, the terminal managing apparatus 30 will be explained. The terminal managing apparatus 30 includes a second communicating unit 31, a second authenticating unit 32, a storage controlling unit 33, and a storage unit 40. The storage controlling unit 33 includes a storing and reading processing unit 34, an extracting unit 35, a terminal managing unit 36, a destination list managing unit 37, a terminal status checking unit 38, and an addition request managing unit 39. The storage unit 40 includes a terminal authentication management database (DB) 41, a terminal management DB 42, a destination list management DB 43, an addition request management DB 44, and an administrator DB 45.

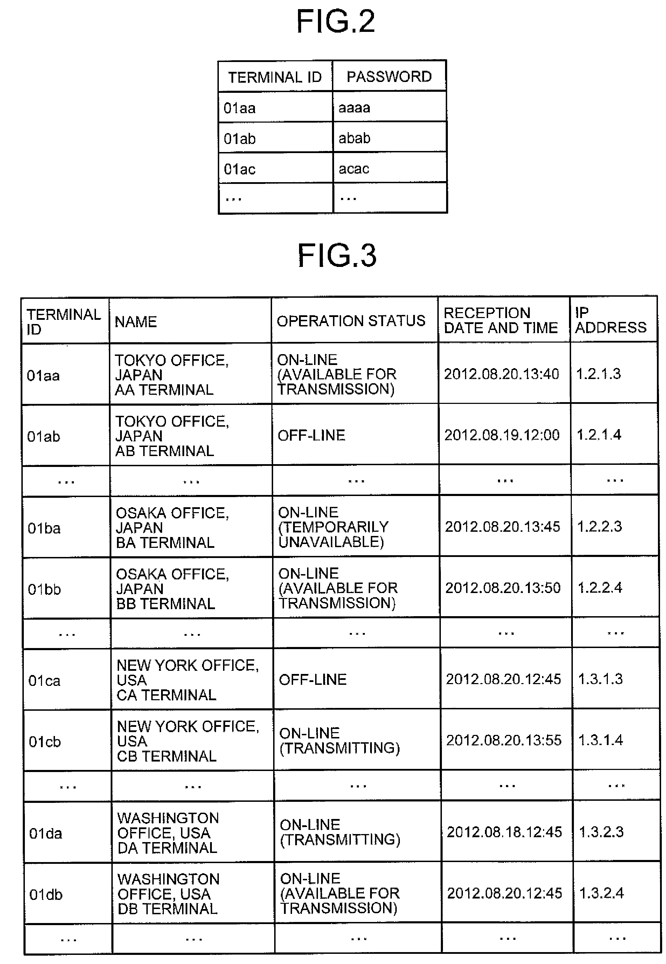

FIG. 2 is a diagram for explaining an example of the terminal authentication management DB 41 according to the first embodiment. Each record in the terminal authentication management DB 41 includes a terminal identification (ID) and a password. A terminal ID is identification information for identifying a terminal 50. The terminal ID may be a piece of identification information stored in the terminal in advance, or entered to the terminal by a user. The password is a password for establishing connection to the management system 100 using the terminal ID. Each record in the terminal authentication management DB 41 may include any column other than those mentioned herein.

FIG. 3 is a diagram for explaining an example of the terminal management DB 42 according to the first embodiment. Each record in the terminal management DB 42 includes a terminal ID, a name, an operation status, a reception date and time, and an IP address of the terminal. The terminal ID is a piece of identification information for identifying a terminal 50. The name may be a name of the terminal 50, the name of a user of the terminal 50, or the name of a location. The operation status represents an operation status of the terminal 50. The reception date and time represents the date and time at which a connection request is received by the management system 100 from the terminal 50. The IP address is an IP address of the terminal 50. Each record in the terminal management DB 42 may include any column other than those mentioned herein.

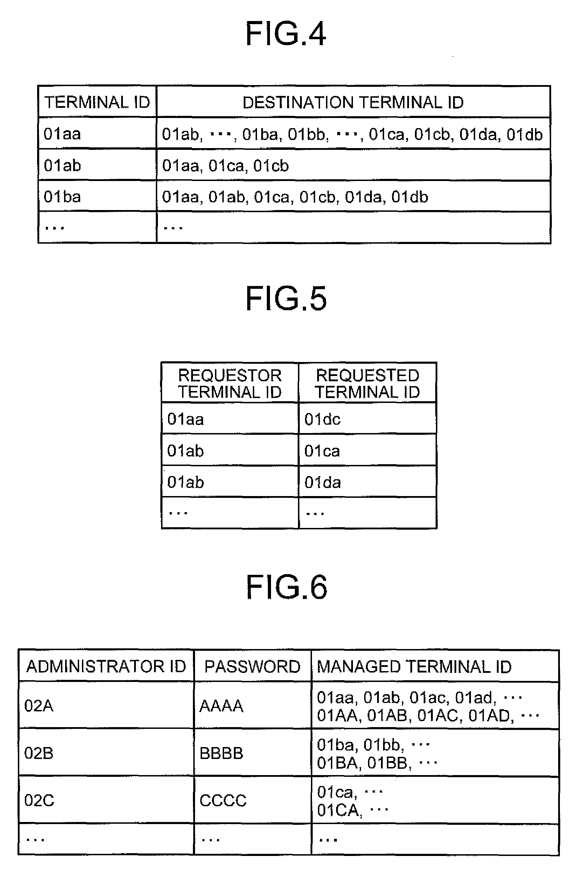

FIG. 4 is a diagram for explaining an example of the destination list management DB 43 according to the first embodiment. Each record in the destination list management DB 43 includes a terminal ID and a destination terminal ID. The terminal ID is a piece of identification information for identifying a terminal 50. The destination terminal ID is the terminal ID of another terminal 50 stored as a destination of the terminal 50. In other words, the destination list management DB 43 stores therein a terminal 50 and another terminal 50 capable of communicating with the terminal 50, for each of the terminals 50. In addition, each record in the destination list management DB 43 may include any column other than those mentioned herein.

FIG. 5 is a diagram for explaining an example of the addition request management DB 44 according to the first embodiment. Each record in the addition request management DB 44 includes a requestor terminal ID and a requested terminal ID. The requestor terminal ID is a piece of identification information for identifying a terminal 50 requesting a registration of a destination. The requested terminal ID is a piece of identification information for identifying a terminal 50 that is to be registered based on the registration request issued by the terminal 50 identified by the requestor terminal ID. In addition, each record in the addition request management DB 44 may include any column other than those mentioned herein.

FIG. 6 is a diagram for explaining an example of the administrator DB 45 according to the first embodiment. Each record in the administrator DB 45 includes an administrator ID, a password, and a managed terminal ID. The administrator ID is a piece of identification information for identifying an administrator of a terminal 50. The administrator ID may be an email address or a user name of the administrator. The password is a password for establishing connection to the management system 100 using the administrator ID. The managed terminal ID is the terminal ID of a terminal 50 managed by an administrator identified by the administrator ID. In FIG. 6, one administrator ID is associated with a plurality of managed terminal IDs in one record, but a plurality of records may be used to associate the administrator ID to the respective managed terminal IDs. In addition, each record in the administrator DB 45 may include any column other than those mentioned herein.

Referring back to FIG. 1, the second communicating unit 31 communicates with other apparatuses via the communication network 20. The second authenticating unit 32 performs authentication of connection to a communication function of the management system 100 (e.g., a function such as a teleconferencing function using the terminals 50). The second authenticating unit 32 retrieves the terminal authentication management DB 41 in the storage unit 40 using a terminal ID and a password included in login information received by the second communicating unit 31 as a retrieval key. The second authenticating unit 32 performs authentication to determine whether connection to a communication function of the management system 100 is to be permitted, by determining if the retrieval key matches any information in the terminal authentication management DB 41. The terminal managing unit 36 manages the operation status of the terminal 50 having requested connection from a communication function of the management system 100. The terminal managing unit 36 updates the record indexed by the terminal ID of a terminal 50 having requested connection from a communication function of the management system 100 in the terminal management DB 42. Specifically, the terminal managing unit 36 changes the operation status from off-line to on-line (available for a transmission), and updates the reception date and time and the IP address.

The extracting unit 35 retrieves the destination list management DB 43 using the terminal ID of the terminal 50 having requested the connection from the management system 100 as a key, and reads destination terminal IDs registered as the destinations of the terminal 50 having requested the connection. The extracting unit 35 then retrieves the terminal management DB 42 using each of the terminal IDs thus extracted as a retrieval key, reads the operation status of the terminal 50 corresponding to each of the terminal IDs thus extracted. In this manner, the extracting unit 35 acquires the operation status of the terminal 50 having requested connection from the management system 100, and the operation status of each of the terminals 50 stored as destinations of the terminal 50 having requested connection from the management system 100. The destination terminal IDs and the operation statuses of the respective destination terminal IDs thus acquired are then transmitted to the terminal 50 having requested connection from the management system 100 via the second communicating unit 31. Through this process, a destination list including the destination terminal IDs is displayed on the terminal 50. In this manner, a user of the terminal 50 is allowed to select a desired destination from the destination list so that a session can be established between these terminals, and to implement a communication function between these terminals. The session between the terminals may be established via the management system 100, or may be established directly without the intermediation of the management system 100. Content data can be exchanged over the session with the destination terminal. Examples of the content data include image data, voice data, and text data. The image data includes still images and moving images.

The extracting unit 35 may also retrieve the destination list management DB 43 using the terminal ID of the terminal 50 having requested connection from the management system 100 as a key, and extract terminal IDs in a record in which the terminal 50 having requested the connection is registered as a destination terminal ID. The extracting unit 35 can then acquire the operation statuses of the terminals 50 having registered the terminal 50 who is the requestor of the connection as a destination.

The addition request managing unit 39 adds, changes, and deletes a record to, in, and from the addition request management DB 44. The terminal status checking unit 38 checks the operation status of a terminal 50 by retrieving the terminal management DB 42. The destination list managing unit 37 adds, changes, and deletes a record to, in, and from the destination list management DB 43. For example, the destination list managing unit 37 retrieves the destination list management DB 43 for a record indexed by a terminal ID matching with a requestor terminal ID registered in the addition request management DB 44, and extracts the record from the destination list management DB 43. The destination list managing unit 37 then adds the requested terminal ID registered in the record indexed by the requestor terminal ID in the addition request management DB 44 to the destination terminal IDs of the record thus extracted in the destination list management DB 43. The storing and reading processing unit 34 performs a process of storing data in the storage unit 40. The storing and reading processing unit 34 also performs a process of reading data stored in the storage unit 40.

The display controlling apparatus 10 includes a first communicating unit 11, a first authenticating unit 12, and a display controlling unit 13. The display controlling unit 13 includes a storing and reading processing unit 14, an extracting unit 15, and a screen creating unit 16. The first communicating unit 11, the storing and reading processing unit 14, and the extracting unit 15 are the same as the second communicating unit 31, the storing and reading processing unit 34, and the extracting unit 35, respectively. Therefore, explanations thereof are omitted herein. Although the display controlling apparatus 10 is not provided with the storage unit 40, the storing and reading processing unit 14 and the extracting unit 15 can achieve the same functions as those of the storing and reading processing unit 34 and the extracting unit 35, respectively, by accessing the storage unit 40 via the communication network 20.

The first authenticating unit 12 performs authentication of connection to a management function of the management system 100 (e.g., a function for adding or deleting a managed terminal 50 or a destination of the managed terminal 50). The first authenticating unit 12 retrieves the terminal authentication management DB 41 (or the administrator DB 45) in the storage unit 40 using a terminal ID (or an administrator ID) and a password included in the login information received by the first communicating unit 11 as a retrieval key. The first authenticating unit 12 performs authentication to determine whether connection to the management function of the management system 100 is to be permitted, by determining whether the retrieval key matches any information in the terminal authentication management DB 41 (or the administrator DB 45).

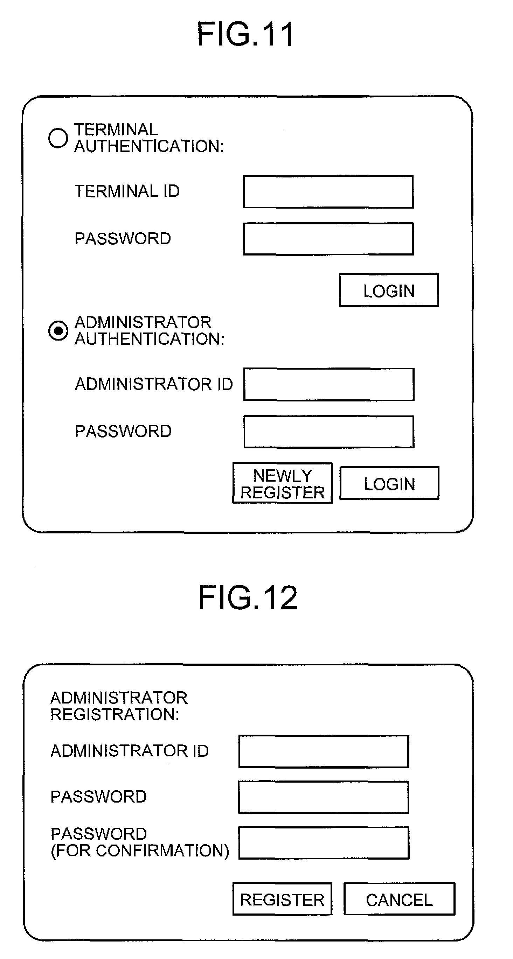

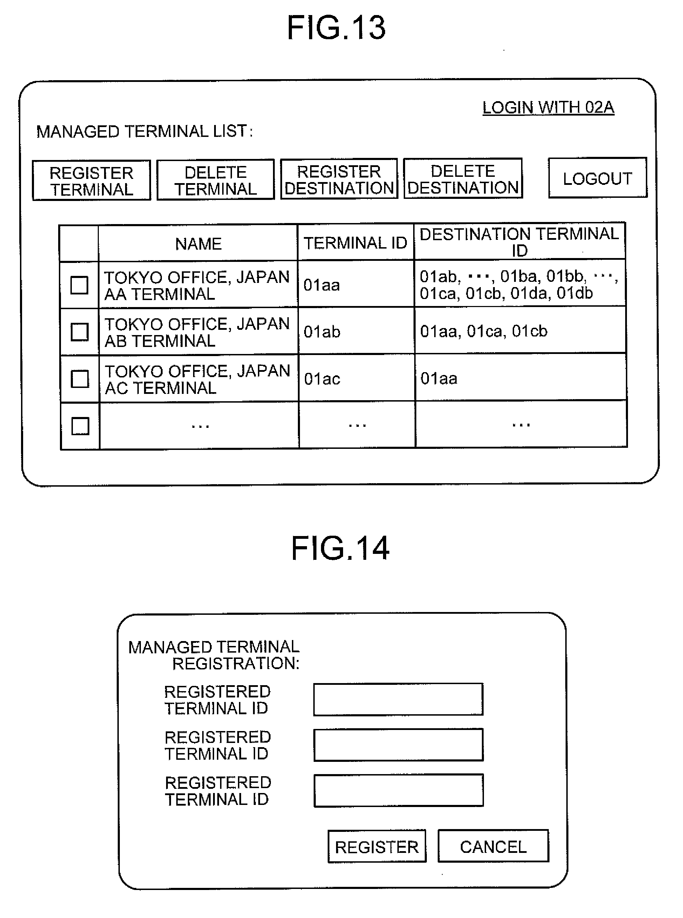

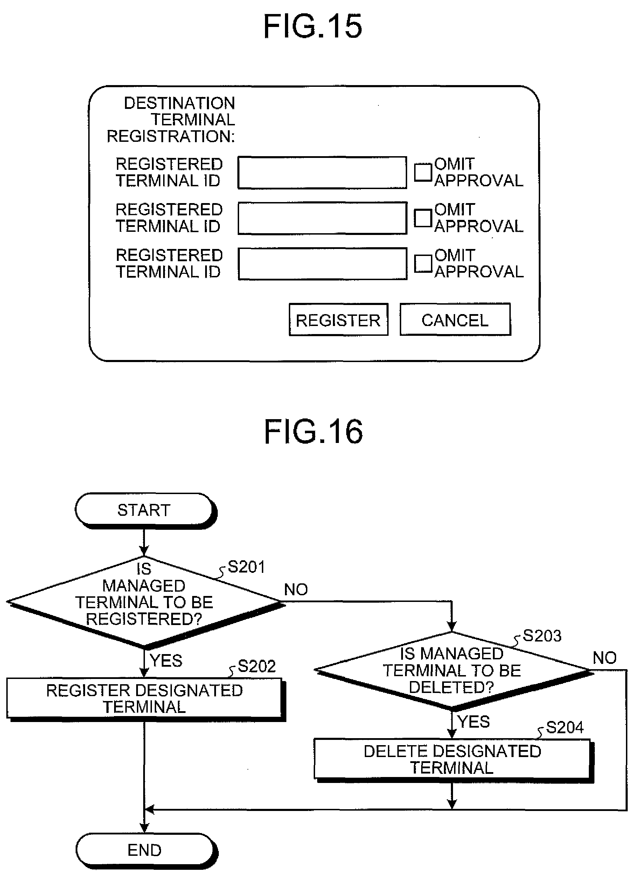

The screen creating unit 16 generates an authentication screen (see FIG. 11), an administrator registration screen (see FIG. 12), a managed terminal list screen (see FIG. 13), a managed terminal registration screen (see FIG. 14), a destination terminal registration screen (see FIG. 15), and the like. The screen creating unit 16 creates a screen using the hypertext markup language (HTML), for example.

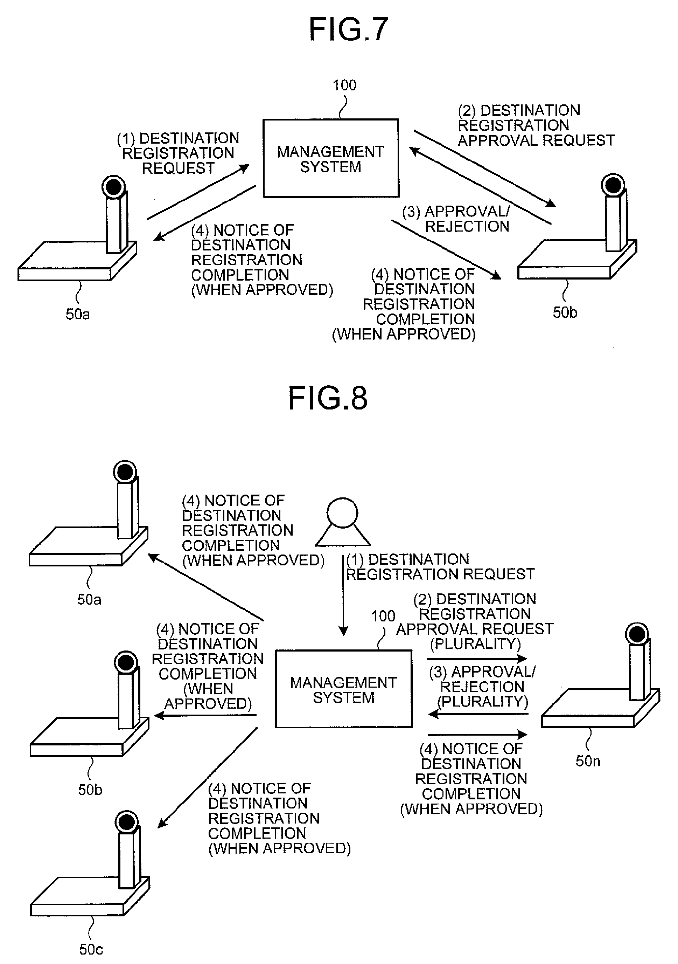

FIG. 7 is a diagram for explaining an example of how a destination is registered when a terminal ID is used to log into the management system 100 according to the first embodiment. The terminal 50a establishes connection to the management system 100 with the terminal ID of the terminal 50a. The terminal 50a then transmits a destination registration request to the management system 100 to check if a registration of the terminal 50b as a destination of the terminal 50a is permitted ((1)). The management system 100 then transmits a destination registration approval request indicating a request for approval of the registration to the terminal 50b ((2)). The terminal 50b then transmits an approving response or a rejecting response to the management system 100 ((3)). When an approving response is received, the management system 100 registers the destination, and transmits a destination registration completion notice indicating that the registration of the destination has been completed to the terminal 50a and the terminal 50b ((4)).

FIG. 8 is a diagram for explaining an example of how a destination is registered when an administrator ID is used to log into the management system 100 according to the first embodiment (with approval). The management system 100 receives connection by an administrator with an administrator ID. The connection may be received by a terminal 50 dedicated to the administrator, or may be received by a general-purpose terminal 50. The administrator (the terminal 50 operated by the administrator) then transmits a destination registration request that is a registration request for asking for a permission to register the terminal 50n as a destination of the terminal 50a, as a destination of the terminal 50b, and as a destination of the terminal 50c to the management system 100 ((1)). The management system 100 then transmits a destination registration approval request that is a request for approval of the registration to the terminal 50n ((2)). The terminal 50n then transmits a response indicating whether the request is approved or rejected to the management system 100 ((3)). When an approving response is received, the management system 100 registers the destination, and transmits a destination registration completion notice indicating that the registration of the terminal 50n as a destination has been completed to the terminal 50a, the terminal 50b, the terminal 50c, and the terminal 50n ((4)).

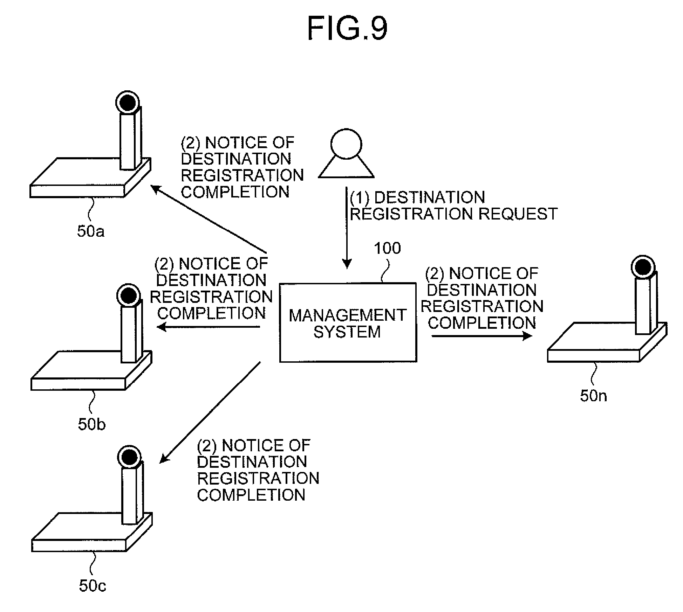

FIG. 9 is a diagram for explaining an example of how a destination is registered when an administrator ID is used to log into the management system 100 according to the first embodiment (with the approval omitted). The management system 100 receives connection by an administrator using an administrator ID. The connection may be received by a terminal 50 dedicated to the administrator, or may be received by a general-purpose terminal 50. The administrator (the terminal 50 operated by the administrator) then transmits a destination registration request that is a registration request for asking for a permission to register the terminal 50n as a destination of the terminal 50a, as a destination of the terminal 50b, and as a destination of the terminal 50c to the management system 100 ((1)). The management system 100 then registers the destination, and transmits a destination registration completion notice indicating that the registration of the terminal 50n as a destination has been completed to the terminal 50a, the terminal 50b, the terminal 50c, and the terminal 50n, without transmitting a registration approval request (a request for approval of the registration) to the terminal 50n ((2)). In FIG. 9, some steps are omitted, compared with the process in FIG. 8. For example, when the administrator IDs for all of the terminal 50a, the terminal 50b, and the terminal 50c are the same as the administrator ID for the terminal 50n, the management system 100 according to the embodiment registers the destination without transmitting a registration approval request (a request for approval of a registration) or receiving an approving response.

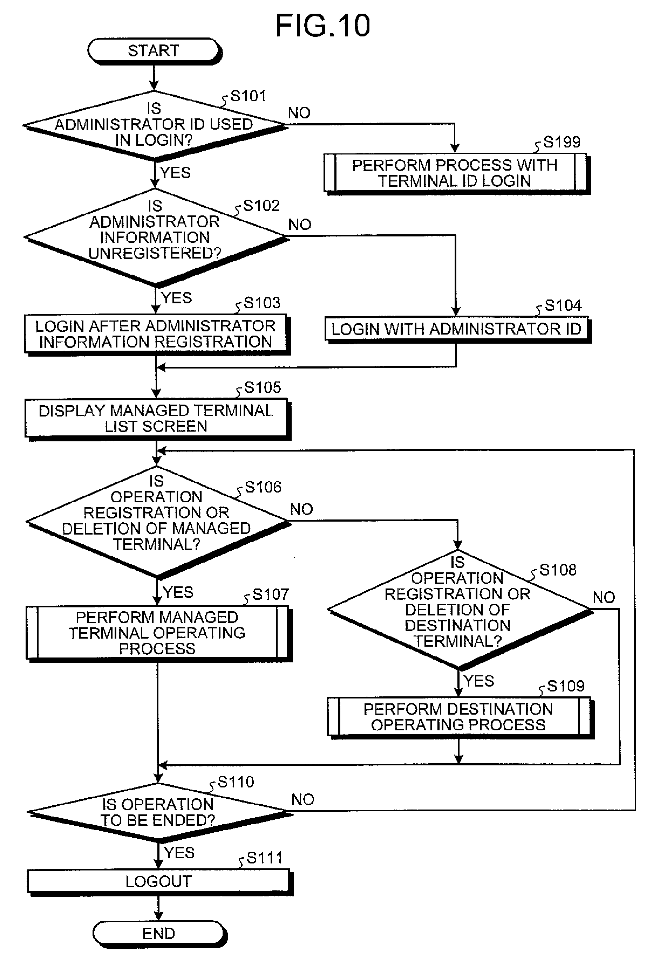

FIG. 10 is a flowchart for explaining a method of managing the management system 100 according to the first embodiment. The first authenticating unit 12 determines if a connection request with an administrator ID is received from the terminal 50 operated by an administrator via the communication network 20 (Step S101). If a connection request with an administrator ID is received (Yes at Step S101), the system control goes to Step S102. If a connection request with an administrator ID is not received (when received is a connection request with a terminal ID) (No at Step S101), the first authenticating unit 12 performs the process with terminal ID login (Step S199).

The process with terminal ID login is the same as the destination registration process permitted when an administrator ID is used in login, except that some restrictions are applied. Specifically, in the process with terminal ID login, a destination registration without any approving response is not permitted. In addition, the process with terminal ID login, a block registration of a plurality of destination terminals using records in the administrator DB 45 is not permitted. Except these two, the process with terminal ID login is the same as the destination registration process with an administrator ID. Therefore, a detailed explanation of the process with terminal ID login will be omitted, and a destination registration process with an administrator ID will be explained below as an example.

FIG. 11 is a diagram of an example of an authentication screen in the management system 100 according to the first embodiment. Before issuing a connection request at Step S101, the authentication screen illustrated in FIG. 11 is displayed on the terminal 50 operated by the administrator, for example.

Referring back to FIG. 10, the first authenticating unit 12 determines wether or not any administrator information such as a password is registered in the administrator DB 45 (Step S102). If administrator information is registered in the administrator DB 45 (No at Step S102), connection to the management system 100 is established with the administrator ID (Step S104). If administrator information is unregistered to the administrator DB 45 (Yes at Step S102), a registration screen is displayed on the terminal 50 operated by the administrator. Administrator information entered in the registration screen is then registered to the administrator DB 45, and the connection to the management system 100 is established (Step S103). An example of a situation in which no administrator information is registered in the administrator DB 45 includes a case in which an administrator ID is used for the first time with a default password.

FIG. 12 is a diagram of an example of an administrator registration screen in the management system 100 according to the first embodiment. At Step S103, the administrator registration screen illustrated in FIG. 12 is presented to the user, for example.

Referring back to FIG. 10, the screen creating unit 16 creates a managed terminal list screen. The screen is then transmitted to the terminal 50, and is displayed on the terminal 50 operated by the administrator (Step S105). FIG. 13 is a diagram of an example of the managed terminal list screen in the management system 100 according to the first embodiment. The managed terminal list screen displays a name, a terminal ID, and destination terminal IDs (the terminal IDs of terminals 50 stored in an associated manner as destinations of the terminal 50 identified by the terminal ID), in a manner associated with the terminal 50 managed with the administrator ID used to log into the management system 100. The managed terminal list screen is created based on information acquired by the display controlling apparatus 10 from the storage unit 40 in the terminal managing apparatus 30 via the communication network 20. For example, the display controlling apparatus 10 can acquire managed terminals ID associated with the administrator ID by retrieving the administrator DB 45 using the administrator ID received by the display controlling apparatus 10 as a retrieval key. Furthermore, the display controlling apparatus 10 can acquire destination terminal IDs associated with each of the managed terminal IDs by retrieving the destination list management DB 43 using the managed terminal ID thus acquired as a retrieval key. In the same manner, the display controlling apparatus 10 can also acquire a name associated with each of the managed terminal IDs by retrieving the terminal management DB 42 using the managed terminal ID thus acquired as a retrieval key. The screen creating unit 16 then determines whether or not the user input is intended for a registration (or a deletion) of a terminal 50 (Step S106). If the user input is intended for a registration (or a deletion) of a terminal 50 (Yes at Step S106), a managed terminal operating process is performed (Step S107). The managed terminal operating process will be described later. If the user input is not intended for a registration (or a deletion) of a terminal 50 (No at Step S106), the system control goes to Step S108.

The screen creating unit 16 determines whether or not the user input is intended for a registration (or a deletion) of a destination of a terminal 50 (Step S108). If the user input is intended for a registration (or a deletion) of a destination of a terminal 50 (Yes at Step S108), a destination operating process is performed (Step S109). The destination operating process will be explained later. If the user input is not intended for a registration (or a deletion) of a destination of a terminal 50 (No at Step S108), the system control goes to Step S110.

The screen creating unit 16 then determines whether or not the operation is to be ended (whether or not any logging-out operation is performed) (Step S1 10). If a logging-out operation is performed (Yes at Step S110), the screen creating unit 16 logs out the user from the management system 100 (Step S111). If no logging-out operation is performed (No at Step S110), the system control returns to Step S106.

FIG. 16 is a flowchart for explaining how a terminal 50 managed by the management system 100 according to the first embodiment is registered and deleted (managed terminal operating process) at S107 illustrated in FIG. 10. The screen creating unit 16 displays a screen for allowing one of a registration and a deletion of a terminal 50 to be selected, and determines whether or not a registration of a terminal 50 is to be performed based on the input to the terminal 50 operated by a user (administrator) (Step S201). If a registration of a terminal 50 is to be performed (Yes at Step S201), the display controlling apparatus 10 transmits an addition request containing a terminal ID entered by the user and the administrator ID to the terminal managing apparatus 40. The storing and reading processing unit 34 in the terminal managing apparatus 40 is then caused to add the terminal ID thus entered to the managed terminal IDs of the record indexed by the administrator ID used in the login in the administrator DB 45 (Step S202). If a registration of a terminal 50 is not to be performed (No at Step S201), the screen creating unit 16 determines whether or not a deletion of a terminal 50 is to be performed (Step S203). If a deletion of a terminal 50 is to be performed (Yes at Step S203), the display controlling apparatus 10 transmits a deletion request containing the terminal ID thus entered and the administrator ID to the terminal managing apparatus 40. The storing and reading processing unit 34 in the terminal managing apparatus 40 is then caused to delete the managed terminal ID from the record indexed by the administrator ID used in the login in the administrator DB 45 (Step S204). If performed is not a deletion of a terminal 50 (No at Step S203), the process is ended.

FIG. 14 is a diagram of an example of the managed terminal registration screen in the management system 100 according to the first embodiment. At Step S202, the managed terminal registration screen illustrated in FIG. 14 is displayed to the user, for example. The transitions of the screens will now be explained. First, a screen transition in the example of a registration will be explained. The screen creating unit 16 detects a pressing operation on a "register terminal" button in the managed terminal list screen illustrated in FIG. 13. The screen creating unit 16 then displays the managed terminal registration screen illustrated in FIG. 14. If the screen creating unit 16 detects a pressing operation on a "register" button after the terminal ID of a terminal 50 (which may be in plurality) is entered, the display controlling apparatus 10 transmits an addition request to the terminal managing apparatus 40, in the manner explained earlier. The storing and reading processing unit 14 in the display controlling apparatus 10 may directly update the record in the administrator DB 45 (add the terminal ID to the managed terminal IDs of the record indexed by the administrator ID used in the login). The screen creating unit 16 also updates the managed terminal list screen correspondingly to the update. A screen transition in the example of a deletion will now be explained. When the screen creating unit 16 detects a pressing operation on a "delete terminal" button while a check is placed in a checkbox in the leftmost column in the information of the terminals 50 displayed in the managed terminal list screen illustrated in FIG. 13, the display controlling apparatus 10 transmits a deletion request to the terminal managing apparatus 40, in the manner explained earlier. In the same manner as for an addition, the storing and reading processing unit 14 in the display controlling apparatus 10 may directly update the record in the administrator DB 45 (delete the terminal ID from the managed terminal IDs in the record indexed by the administrator ID used in the login). The screen creating unit 16 also updates the managed terminal list screen correspondingly to the update. Explained with reference to FIG. 14 is an example in which the terminal ID is entered by a user, but a terminal ID may be entered by designating a file in which a terminal ID is specified, for example (e.g., by designating a path required for the screen creating unit 16 to refer to the file).

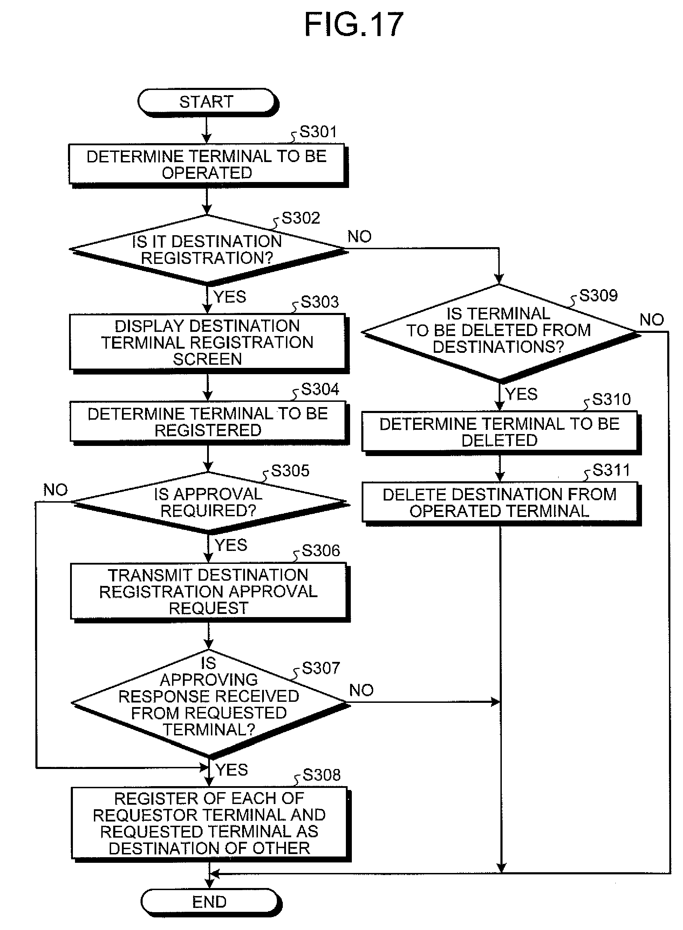

FIG. 17 is a flowchart for explaining how a destination of a terminal 50 managed by the management system 100 according to the first embodiment is registered and deleted (destination operating process) at S109 illustrated in FIG. 10. In this flowchart, because an administrator ID is used in the login, functions such as a destination registration without approval and a block registration of a plurality of destination terminals can be executed, as explained earlier, compared with when a terminal ID is used in login. The screen creating unit 16 receives an operation for specifying a terminal to be registered or deleted as a destination, from the terminal 50 operated by the administrator, and identifies a terminal ID to be registered or deleted (which may be in plurality) (Step S301). The screen creating unit 16 then determines whether or not the operation received from the terminal 50 operated by the administrator is an operation indicating a registration of a destination (Step S302). For example, the screen creating unit 16 determines if a pressing operation on a "register destination" button in the managed terminal list screen illustrated in FIG. 13 is detected. In the managed terminal list screen illustrated in FIG. 13, a plurality of terminals 50 can be selected at the same time, as mentioned earlier. If the operation is not an operation indicating a registration of a destination (No at Step S302), the system control goes to Step S309. If the operation is an operation indicating a registration of a destination (Yes at Step S302), the screen creating unit 16 displays a screen for entering a terminal 50 to be registered as a destination (Step S303).

FIG. 15 is a diagram of an example of the destination terminal registration screen in the management system according to the first embodiment. A checkbox is provided for each of the terminals 50 to be registered as a destination, as an item for selecting whether or not an approving process at Steps S305 and S306, which will be explained later, is to be omitted. The display controlling apparatus 10 may inquire the terminal managing apparatus 30 if the terminal ID of the terminal 50 who is the requestor of the destination registration (the terminal 50 determined at Step S301) and the terminal ID of the terminal 50 who is requested for the destination registration (the terminal 50 entered in the screen illustrated in FIG. 15) are both associated to the administrator ID of the same administrator based on the information in the administrator DB 45, and display the checkbox under the condition that they both are determined to be associated to the same administrator ID. If these terminals 50 are determined not to be managed by the same administrator, the checkbox is not displayed and the approving process at Step S305 is not skipped. Alternatively, the screen creating unit 16 may automatically omit the approving process if both of these terminals 50 are managed by the same administrator (associated to the same administrator ID) based on the information in the administrator DB 45, without using any checkbox. This process can be implemented by causing the display controlling apparatus 10 to transmit a request for adding a destination to the terminal managing apparatus 30 via the communication network 20, and causing the terminal managing apparatus 30 to refer to the information in the administrator DB 45 stored in the storage unit 40. Explained in FIG. 15 is an example in which the terminal ID is entered by a user, but a terminal ID maybe entered by designating a file in which a terminal ID is specified, for example (e.g., by designating a path that is required for the screen creating unit 16 to refer to the file).

Referring back to FIG. 17, the screen creating unit 16 determines a registered terminal to be registered based on the terminal ID entered in the screen illustrated in FIG. 15 (Step S304). To explain using the exemplary screen illustrated in FIG. 15, in response to a "register" button being pressed down, the screen creating unit 16 identifies and determines the registered terminal ID thus entered. The display controlling apparatus 10 then transmits the registered terminal ID thus determined (the terminal ID who is requested for the destination registration) to the terminal managing apparatus 30. More specifically, the first communicating unit 11 in the display controlling apparatus transmits a request for adding a destination to the terminal managing apparatus 30. The addition request contains the terminal ID of the terminal 50 who is the requestor of the destination registration (the terminal 50 determined at Step S301), the terminal ID of the corresponding terminal 50 requested for the destination registration (the terminal 50 entered in the screen illustrated in FIG. 15), and the administrator ID used in the login. When the checkboxes are displayed in FIG. 15, the addition request also contains information indicating that the approval requirement needs to be checked based on the designations of the checkboxes for the respective terminals, and information indicating for which registered terminal approval can be omitted based on the checkbox designation for the respective terminals.

The terminal managing apparatus 30 then determines whether or not an approving process is required based on the addition request thus received, for each of the terminals 50 to be registered as a destination (Step S305). Specifically, if the addition request thus received contains the information indicating that an approval requirement needs to be checked based on the terminal designations via the checkboxes (when the checkboxes are displayed in FIG. 15), the terminal managing apparatus 30 determines that the approving process is not required for a registered terminal with a check in the checkbox, and determines that approving process is required for a registered terminal without a check in the checkbox.

If the addition request does not contain the information indicating that an approval requirement needs to be checked based on the designations of the checkboxes for the respective terminals (when the checkboxes are not displayed in FIG. 15), the terminal managing apparatus 30 determines whether or not the terminal ID of the requestor of the destination registration and the terminal ID who is requested for the destination registration are both associated to the same administrator ID, by referring to the administrator DB 45. If they are associated to the same administrator ID, the terminal managing apparatus 30 determines that the approving process is not required. If not, the terminal managing apparatus 30 determines that the approving process is required.

When the screen illustrated in FIG. 15 only permits a terminal ID associated with an administrator ID of the administrator having logged into the administrator DB 45 to be entered as a terminal ID to be registered, the terminal managing apparatus 30 simply determines that none of the terminals to be registered requires the approving process, without making the determination of whether or not the terminal ID is associated with the same administrator ID.

If the terminal managing apparatus 30 determines that the approving process is required (Yes at Step S305), the system control goes to Step S306. If the terminal managing apparatus 30 determines that the approving process is not required (No at Step S305), the system control goes to Step S308.

The management system 100 then transmits a request for approval for a destination registration to the terminal 50 to be registered as a destination (Step S306). More specifically, for example, this process can be achieved in the following manner. If the terminal managing apparatus 30 determines that a pair of a requestor terminal and a requested terminal (terminal to be registered) of a destination registration request requires the approving process at Step S305, the addition request managing unit 39 in the terminal managing apparatus 30 adds and stores, to the addition request management DB 44 illustrated in FIG. 5, a new record in which the requestor terminal ID and the requested terminal ID included in the received addition request are associated.

The terminal status checking unit 38 in the terminal managing apparatus 30 then checks the operation status of the terminal corresponding to the requested terminal ID in the addition request management DB 44, by referring to the terminal management DB 42 based on the requested terminal ID. If the terminal status checking unit 38 determines that the operation status indicates that the registered terminal is available for a communication (e.g., on-line (available for a transmission)), the second communicating unit 31 transmits a destination registration approval request to the corresponding terminal 50. If the operation status indicates that the terminal is not available for a communication (e.g., off-line), the second communicating unit 31 transmits the approval request when the operation status is updated to available for a communication.

The management system 100 then determines whether or not an approving response is received from the requested terminal to which the approval request is transmitted (Step S307). More specifically, for example, this determination can be made by determining whether or not the second communicating unit 31 in the terminal managing apparatus 30 has received a response to the destination registration approval request from the terminal 50, and further determining whether or not the response is an approving response.

If an approving response is received (Yes at Step S307), or if approval is determined not required at Step S305 (No at Step S305), each of the terminal 50 requesting for a destination registration and the terminal 50 requested for the destination registration registers the other as a destination terminal (Step S308). In other words, if Yes is determined at Step S307, the destination list managing unit 37 in the terminal managing apparatus 30 adds the terminal ID of the other terminal 50 to the destination terminal IDs in the corresponding record in the destination list management DB 43 (makes an addition to the record of the terminal 50 who is the requestor of the destination registration and to the record of the terminal 50 who is requested for the destination registration), based on the information in the addition request management DB 44. If No is determined at Step S305, the destination list managing unit 37 adds the terminal ID of one of the terminals 50 to the record of the other terminal 50 as a destination terminal ID in the destination list management DB 43 (makes an addition to the record of the requestor terminal 50 and to the record of the requested terminal 50 of the destination registration request), based on the terminal IDs (the destination requestor terminal ID and the destination requested terminal ID) included in the addition request received thereby. At Step S308, only the terminal 50 who is requested for the registration maybe registered as a destination of the registration requestor terminal 50, without registering the other terminal 50 as a destination terminal. When the registrations are completed, the second communicating unit 31 may send a notice of the completion of the addition of the destination to the terminals 50 that are associated in the record thus updated in the destination list management DB 43. When the process is completed, the addition request managing unit 39 in the terminal managing apparatus 30 deletes the record for which the registering process is completed from the addition request management DB 44. If the pair of a destination requestor terminal ID and a destination requested terminal ID is determined not requiring any approval at Step S305, no record of the pair is added to the addition request management DB 44. Therefore, the deletion of the record is not required.

Step S306 may be executed even in a case in which the approving process is determined not required at Step S305 (No at Step S305). In such a case, Step S308 can be executed regardless of whether or not a response to a destination registration approval request has been received, or whether or not the response is an approving response.

The screen creating unit 16 determines whether or not the operation is an operation indicating a deletion of a destination (Step S309). For example, the screen creating unit 16 determines if the "delete destination" button is pressed in the managed terminal list screen illustrated in FIG. 13. The managed terminal list screen illustrated in FIG. 13 allows a plurality of terminals 50 to be selected at the same time. If the operation is not an operation indicating a deletion of a destination (No at Step S309), the process is ended. If the operation is an operation indicating a deletion of a destination (Yes at Step S309), the screen creating unit 16 displays a screen for entering a terminal 50 to be deleted from the destination, identifies the terminal ID of the terminal 50 thus entered (Step S310), and deletes the terminal 50 from the destinations of the terminal thus operated (Step S311).

### Second Embodiment

A management system 100 according to a second embodiment of the present invention will now be explained. The management system 100 according to the second embodiment is different from the management system 100 according to the first embodiment in that one DB (destination list approval management DB) is used for both of the destination list management DB 43 and the addition request management DB 44.

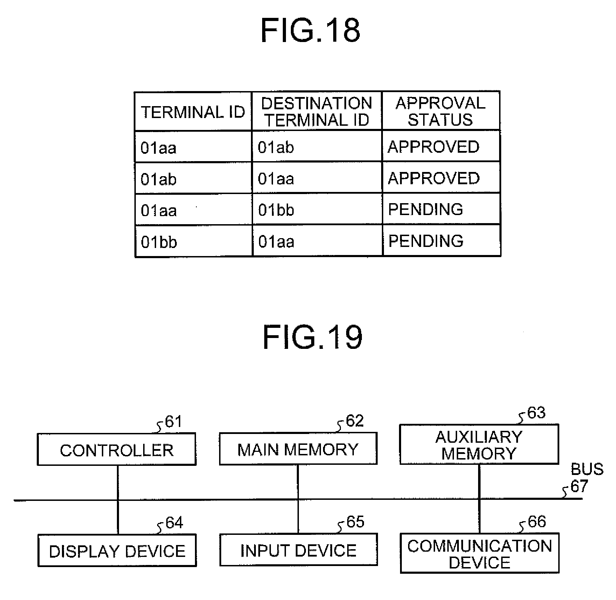

FIG. 18 is a diagram for explaining an example of the destination list approval management DB according to the second embodiment. Each record in the destination list approval management DB includes a terminal ID, a destination terminal ID, and an approval status. The terminal ID is a piece of identification information for identifying a terminal 50. The destination terminal ID is the terminal ID of another terminal 50 stored as a destination on the terminal 50. The approval status is a status of approval for the pair of a terminal ID and a destination terminal ID. In other words, the destination list approval management DB manages one destination terminal ID in one record, in a manner associated with a terminal ID, and manages the approval status of each destination terminal ID. For example, in the example illustrated in FIG. 18, because each one of 01aa and 01ab is registered as a destination of the other, 01aa and 01ab can communicate with each other. Because 01bb is not registered as a destination of 01ab, 01ab cannot designate 01bb as a communication counterpart. Although each one of 01aa and 01bb has registered the other as a destination in the destination list approval management DB, one cannot designate the other as a communication counterpart because the approval status is still "pending". In addition, each record in the destination list approval management DB may include any column other than those mentioned herein.

The way in which a destination of a terminal 50 is registered and deleted when the destination list approval management DB is used will now be explained. The entire process is the same as that illustrated in the flowchart in FIG. 17. Therefore, the process according to the second embodiment will be explained with reference to the flowchart in FIG. 17, in the same manner as for the management system 100 according to the first embodiment.

Because Steps S301 to S305 are the same as those in the management system 100 according to the first embodiment, explanations thereof are omitted herein.

The management system 100 transmits a destination registration approval request to a terminal 50 to be registered as a destination (Step S306). More specifically, for example, this process can be achieved in the following manner. When a pair of a destination requestor terminal ID and a destination requested terminal ID (terminal to be registered) is determined to require approval at Step S305, the addition request managing unit 39 in the terminal managing apparatus 30 adds the requestor terminal ID and the requested terminal ID included in the received addition request as a new record of the destination list approval management DB. At this time, the approval status is set to "pending". To explain using a specific example, it is assumed herein that a terminal 01aa (requestor terminal) issues a destination registration request to a terminal 01bb (requested terminal).

When the terminal 01aa requests an addition of the terminal 01bb as a destination, the terminal 01aa that is the requestor terminal is added to the terminal ID column in the destination list approval management DB, and the terminal 01bb that is the requested terminal is added to the destination terminal ID column in the destination list approval management DB. The approval status of the record is then set to "pending". The "pending" herein means a status in which the terminal in the terminal ID column has requested for an addition of the terminal in the destination terminal ID column as a destination, but the addition is not approved yet. The terminal 01bb receiving the addition request may be also added to the terminal ID column at the same time, and the terminal 01aa that is the requestor terminal may be added to the destination terminal ID column, and the approval status may be set to "pending". By adding a record in this manner, a destination is added not only to the terminal requesting the addition, but also to the terminal receiving the request, that is, each is added as a destination of the other. (In the management system 100 according to the first embodiment, a terminal pair is once added to the addition request management DB 44, but in the management system 100 according to the second embodiment, a terminal pair is directly written to the destination list approval management DB.)

The terminal status checking unit 38 in the terminal managing apparatus 30 then refers to the terminal management DB 42 based on the destination terminal ID whose approval status is "pending" in the destination list approval management DB, and checks the operation status in the corresponding record. When the terminal status checking unit 38 determines that operation status indicates that the terminal is available for a communication (e.g., on-line (available for a transmission)), the second communicating unit 31 transmits a destination registration approval request to the corresponding terminal 50. If the operation status indicates that the terminal is not available for a communication (e.g., off-line), the second communicating unit 31 transmits the approval request when the operation status is updated to available for a communication. The approval request may include the corresponding requestor terminal ID as information for identifying which terminal has issued the destination registration request.

The management system 100 then determines whether or not an approving response has been received from the terminal 50 to be registered to which the approval request has been transmitted (Step S306). More specifically, for example, this determination can be made by determining whether or not the second communicating unit 31 in the terminal managing apparatus 30 has received a response to the destination registration approval request from the terminal 50, and further determining whether or not the response is an approving response. The response may include the requestor terminal ID as information for identifying the terminal ID having issued the destination registration request for which the response is received.

If an approving response is received (Yes at Step S307), or if approval is determined not required at Step S305 (No at Step S305), each of the requestor terminal 50 and the requested terminal 50 of the destination registration request registers the other as a destination terminal (Step S308). Specifically, if Yes is determined at Step S307, the destination list managing unit 37 in the terminal managing apparatus 30 updates the approval status of the record containing the pair of the registration requestor terminal ID and the requested terminal ID of the registration request to "approved" in the destination list approval management DB. To explain using the example mentioned above, the approval status of the record 01aa-01bb and the approval status of the record 01bb-01aa are both updated from "pending" to "approved". If No is determined at Step S305, the destination list managing unit 37 adds the terminal ID of one of the terminals 50 to the record of the other terminal 50 as a destination terminal ID in the destination list approval management DB (makes an addition to the record of the requestor terminal 50 and the record of the requested terminal 50 of the destination registration request), based on the terminal IDs (the destination requestor terminal ID and the destination requested terminal ID) included in the addition request received thereby, and updates the approval statuses of the both to "approved" (because no approval is required). The destination registration is thus completed. In the management system 100 according to the embodiment, the terminal 50 can only designate a destination having an "approved" approval status as a communication counterpart. Therefore, the terminal 50 is not permitted to designate a destination registered as a destination terminal ID but having a "pending" approval status in the destination management DB as a communication counterpart.

Step S306 may be executed even in a case in which the approving process is determined not required at Step S305 (No at Step S305). In such a case, Step S308 can be executed regardless of whether or not a response to a destination registration approval request has been received, or whether or not the response is an approving response.

A modification of the first and the second embodiments will now be explained. In the first and the second embodiments, the screen creating unit 16 determines a terminal to be operated (Step S301), and determines if the terminal is to be registered (Step S304) or to be deleted (Step S310) depending on which one of a registration and a deletion is selected, in the manner illustrated in FIG. 17. Although there are some cases in which an administrator selects a terminal to be operated in the manner described above, there are other cases in which the administrator wants to register (or delete) every terminal managed by the administrator as a destinations of the others. In such a case, the user does not need to select the terminals, and can just select the "register destination" button or the "delete destination" button in the managed terminal list screen illustrated in FIG. 13.

When the "register destination" button is selected (Yes at Step S302 in FIG. 17), the process goes to Step S308 in FIG. 17. At Step S308, a destination registration is performed to pairs of a requestor terminal and a requested terminal. The destination registration process is performed to every pair of terminals corresponding to the respective terminal IDs associated with the administrator ID used in the login. For example, assuming that three managed terminal IDs of the terminal 01aa, the terminal 01ab, and the terminal 01bb are associated to the administrator ID in the administrator DB 45, the display controlling apparatus 10 identifies, as pairs of a destination registration requestor and requested terminals, (1) the terminal 01aa and the terminal 01ab, (2) the terminal 01ab and the terminal 01aa, (3) the terminal 01aa and the terminal 01bb, (4) the terminal 01bb and the terminal 01aa, (5) the terminal 01ab and the terminal 01bb, and (6) the terminal 01bb and the terminal 01ab. The display controlling apparatus 10 then transmits destination addition requests for all of these respective pairs thus identified to the terminal managing apparatus 30. In such a case, the destination registration process itself explained in the first and the second embodiments remains the same, except a different mechanism for identifying a terminal is used. Because every target terminal of the destination registration process is a managed terminal, an approval requirement does not need to be checked at S305 in FIG. 17, so that a registration process can be performed without some steps, including transmission of an approval request and checking for an approving response.

If selected is the "delete destination" button (No at Step S302 in FIG. 17), the process goes to Step S311 in FIG. 17. The terminal to be deleted is identified in the same manner as in the case of "register destination" described above, except that the process to be performed is a deletion instead of a registration.

By allowing the terminals to be identified in the manner described above, an administrator can take a smooth process of merely logging into the management system 100 with an administrator ID and pressing down the register destination button or the delete destination button, without being required to requesting for approval or checking for a response, to perform a process of registering or deleting destinations within the scope of the terminals managed by the administrator.

FIG. 19 is a diagram for explaining an example of a hardware configuration of the display controlling apparatus 10 and the terminal managing apparatus 30 in the management system 100 according to the first and the second embodiments.

The display controlling apparatus 10 (the terminal managing apparatus 30) according to the first and the second embodiments includes a controller 61, a main memory 62, an auxiliary memory 63, a display device 64, an input device 65, and a communication device 66. The controller 61, the main memory 62, the auxiliary memory 63, the display device 64, the input device 65, and the communication device 66 are connected to one another via a bus 67.

The controller 61 executes a computer program read from the auxiliary memory 63 onto the main memory 62. The main memory 62 is a memory such as a read-only memory (ROM) and a random access memory (RAM). The auxiliary memory 63 is a hard disk drive (HDD) or an optical drive, for example. The display device 64 is a monitor for displaying the status of the display controlling apparatus 10 (the terminal managing apparatus 30), for example. The display device 64 is a liquid crystal display, for example. The input device 65 is an interface for operating the display controlling apparatus 10 (the terminal managing apparatus 30). The input device 65 is a keyboard and a mouse, for example. The communication device 66 is an interface for connecting to a network.

A computer program executed on the display controlling apparatus 10 (the terminal managing apparatus 30) according to the first and the second embodiments is provided as a computer program product recorded in a computer-readable recording medium such a compact disc read-only memory (CD-ROM), a memory card, a compact disc recordable (CD-R), or a digital versatile disc (DVD), as a file in an installable or executable format.

The computer program executed on the display controlling apparatus 10 (the terminal managing apparatus 30) according to the first and the second embodiments may also be provided in a manner stored in a computer connected to a network such as the Internet, and made available for a download over the network. The computer program executed on the display controlling apparatus 10 (the terminal managing apparatus 30) according to the first and the second embodiments may be provided or distributed over a network such as the Internet.

Furthermore, the computer program executed on the display controlling apparatus 10 (the terminal managing apparatus 30) according to the first and the second embodiments may be provided in a manner incorporated in a ROM or the like in advance.

The computer program executed on the display controlling apparatus 10 (the terminal managing apparatus 30) according to the first and the second embodiments has a modular structure including each of the functional blocks illustrated in FIG. 1. In the actual hardware, by causing the controller 61 to read the computer program from the storage medium and to execute the computer program, each of the functional blocks is loaded onto the main memory 62. In other words, each of the functional blocks is generated on the main memory 62.

The whole or a part of each of the functional blocks illustrated in FIG. 1 may be implemented as hardware such as an integrated circuit (IC), instead of an implementation as software. Furthermore, the storage unit 40 may be provided as the auxiliary memory 63, for example, and data in the storage unit 40 in the auxiliary memory 63 may be loaded onto the main memory 62 as required.

As described above, with the management system 100, the management method, and the computer program product according to the first and the second embodiments, registrations of destinations of a terminal 50 can be performed more smoothly.

In addition, explained in the embodiments is an example in which the management system 100 includes the terminal managing apparatus 30 and the display controlling apparatus 10 connected via the communication network 20. However, the management system 100 may be configured as an apparatus in which the terminal managing apparatus 30 and the display controlling apparatus 10 are integrated.

The first and the second management system 100 may be applied to any communication system in which the terminals 50 are allowed to communicate each other. For example, the management system 100 may be applied to a teleconference system, a voice conference system, a voice telephone system (including a mobile telephone system), a text-based chat system, and a white board sharing system, for example. Furthermore, the terminal 50 may be a terminal dedicated to such a communication system, or a general-purpose terminal such as a personal computer, a smartphone, or a tablet terminal. The terminal managing apparatus 30 and the display controlling apparatus 10 may be any information processing apparatus including the functional blocks illustrated as an example in FIG. 1, and may be a dedicated server or a general-purpose terminal.

According to the present invention, it is possible to provide a management system, a management method, and a computer program product that allow a terminal to be registered as a destination more smoothly, advantageously.

## Claims

1. A management system for managing one or more first terminals (50a), and one or more second terminals (50b), the management system comprising:
a storage unit (40) configured to store therein identification information for identifying the first terminal (50a) so that a first terminal (50a) and a second terminal (50b) being specifiable as a destination of the first terminal (50a) are in an associated manner;
an authenticating unit (32) configured to perform authentication for establishing connection to the management system with identification information of the first terminal (50a) or identification information of an administrator;
a communicating unit (31) configured to receive, when the authenticating unit (32) performs authentication for establishing connection to the management system with the identification information of the first terminal (50a), from the first terminal (50a) a request for registration of the second terminal (50b) as a destination of the first terminal (50a) and to transmit a request for approval of the registration to the second terminal (50b); and
a storage controlling unit (33) configured to store, in the storage unit (40), identification information for identifying the second terminal (50b) as being specifiable as a destination in a manner associated with the identification information for identifying the first terminal (50a), when the connection to the management system is established with the identification information of the first terminal (50a) and an approving response to the request for approval is received from the second terminal (50b),
**characterized in that**
the communication unit (31) is configured to receive, when the authenticating unit (32) performs authentication for establishing connection to the management system with the identification information of an administrator, from a terminal operated by the administrator, a request for registration of the second terminal (50b) as a destination of the first terminal (60a) and not to transmit a request for approval of the registration to the second terminal (50b), and
the storage controlling unit is configured to store, in the storage unit (40), identification information for identifying the second terminal (50b) as being specifiable as a destination in a manner associated with the identification information for identifying the first terminal (50a), when the connection to the management system is established with the identification information of the terminal operated by the administrator and a request for approval for the registration is not transmitted to the second terminal (50b).

2. The management system according to claim 1, further comprising a display controlling unit (10) that is configured to display a screen including an item for designating information whether or not the approval is to be omitted for the second terminal, when connection to the management system is established with the identification information of the administrator.

3. The management system according to claim 2, wherein
the display controlling unit (10) is configured to display the screen including the item for designating whether or not the approval is to be omitted when identification information of an administrator of the first terminal (50a) and identification information of an administrator of the second terminal (50b) are the same.

4. The management system according to claim 2 or 3, wherein
the display controlling unit (10) is configured to display the screen including the item for designating information whether or not the approval is to be omitted when the identification information of the first terminal (50a) and the identification information of the second terminal (50b) are partially same.

5. The management system according to any one of claims 1 to 4, wherein
the display controlling unit (10) is configured to display, when connection to the management system is established by identification information of an administrator, a screen including a list of terminals managed with the identification information of the administrator, and to display, to the first terminal (50a) included in the list of the terminals, a screen that allows to select a block registration of a plurality of second terminals (50b) being specifiable as a destination.

6. A managing method performed by a management system managing one or more first terminals (50a) and one or more second terminals (50b) including a storage unit (40) configured to store therein identification information for identifying a first and a second terminal (50a, 50b) so that the first terminal (50a) and the second terminal (50b) being specifiable as a destination of the first terminal (50a) are in an associated manner, the managing method comprising:
by an authenticating unit (32), performing authentication for establishing connection to the management system with identification information of the first terminal (50a) or identification information of an administrator;
by a communicating unit (31), receiving, when the authenticating unit (32) performs authentication for establishing connection to the management system with the identification information of the first terminal (50a), from the first terminal (50a), a request for registration of the second terminal (50b) as a destination of the first terminal (50a) and transmitting a request for approval of the registration to the second terminal (50b); by a storage controlling unit (33), storing, in the storage unit (40), identification information for identifying the second terminal (50b) as being specifiable as a destination in a manner associated with the identification information for identifying the first terminal (50a), when the connection to the management system is established with the identification information of the first terminal (50a) and an approving response to the request for approval is received from the second terminal (50b),,
**characterized by** the communicating unit (31), receiving, when the authenticating unit (32) performs authenticating for establishing connection to the management system with the identification information of an administrator, from a terminal operated by the administrator, a request for registration of the second terminal (50b) as a destination of the first terminal (50a) and not transmitting a request for approval of the registration to the second terminal (50b), and
by the storage controlling unit (33), storing, in the storage unit (40), identification information before identifying the second terminal (50b) as being specifiable as a designation in a manner associated with the identification information for identifying the first terminal (50a) when the connection to the management system is established with the identification information of the terminal operated by the administrator and a request for approval for the registration is not transmitted to the second terminal (50b).

7. A computer program product comprising a non-transitory computer-usable medium having a computer program that causes a computer executing the program to perform the method according to the preceding claim.

## Patentansprüche

1. Managementsystem zum Verwalten eines oder mehrerer erster Endgeräte (50a) und eines oder mehrerer zweiter Endgeräte (50b, wobei das Managementsystem Folgendes umfasst:
eine Speichereinheit (40), die konfiguriert ist, darin Identifizierungsinformationen zum Identifizieren des ersten Endgeräts (50a) derart zu speichern, dass ein erstes Endgerät (50a) und ein zweites Endgerät (50b), das als ein Ziel des ersten Endgeräts (50a) spezifizierbar ist, einander zugeordnet sind;
eine Authentifizierungseinheit (32), die konfiguriert ist, zum Einrichten einer Verbindung mit dem Managementsystem mit den Identifizierungsinformationen des ersten Endgeräts (50a) oder mit den Identifizierungsinformationen eines Administrators eine Authentifizierung durchzuführen;
eine Kommunikationseinheit (31), die konfiguriert ist, wenn die Authentifizierungseinheit (32) die Authentifizierung zum Einrichten der Verbindung mit dem Managementsystem mit den Identifizierungsinformationen des ersten Endgeräts (50a) durchführt, vom ersten Endgerät (50a) eine Anforderung zur Registrierung des zweiten Endgeräts (50b) als ein Ziel des ersten Endgeräts (50a) zu empfangen und eine Anforderung einer Registrierungsbestätigung an das zweite Endgerät (50b) zu übertragen; und
eine Speichersteuereinheit (33), die konfiguriert ist, die Identifizierungsinformationen zum Identifizieren des zweiten Endgeräts (50b), als ein Ziel spezifizierbar zu sein, in der Speichereinheit (40) in einer Weise zu speichern, dass sie den Identifizierungsinformationen zum Identifizieren des ersten Endgeräts (50a) zugeordnet sind, wenn die Verbindung mit dem Managementsystem mit den Identifizierungsinformationen des ersten Endgeräts (50a) eingerichtet ist und eine bestätigende Antwort auf die Bestätigungsanforderung vom zweiten Endgerät (50b) empfangen wird,
**dadurch gekennzeichnet, dass**
die Kommunikationseinheit (31) konfiguriert ist, wenn die Authentifizierungseinheit (32) die Authentifizierung zum Einrichten der Verbindung mit dem Managementsystem mit den Identifizierungsinformationen eines Administrators durchführt, von einem Endgerät, das von dem Administrator bedient wird, eine Anforderung zur Registrierung des zweiten Endgeräts (50b) als ein Ziel des ersten Endgeräts (60a) zu empfangen und keine Anforderung einer Registrierungsbestätigung an das zweite Endgerät (50b) zu übertragen, und
die Speichersteuereinheit konfiguriert ist, die Identifizierungsinformationen zum Identifizieren des zweiten Endgeräts (50b), als ein Ziel spezifizierbar zu sein, in der Speichereinheit (40) in einer Weise zu speichern, dass sie den Identifizierungsinformationen zum Identifizieren des ersten Endgeräts (50a) zugeordnet sind, wenn die Verbindung zum Managementsystem mit den Identifizierungsinformationen des Endgeräts eingerichtet ist, das von dem Administrator bedient wird, und keine Anforderung einer Registrierungsbestätigung an das zweite Endgerät (50b) übertragen wird.

2. Managementsystem nach Anspruch 1, das ferner eine Anzeigesteuereinheit (10) umfasst, die konfiguriert ist, einen Schirm anzuzeigen, der ein Element zum Zuweisen von Informationen, ob die Bestätigung für das zweite Endgerät ausgelassen werden soll oder nicht, enthält, wenn die Verbindung mit dem Managementsystem mit den Identifizierungsinformationen des Administrators eingerichtet ist.

3. Managementsystem nach Anspruch 2, wobei
die Anzeigesteuereinheit (10) konfiguriert ist, den Schirm anzuzeigen, der das Element zum Zuweisen von Informationen, ob die Bestätigung ausgelassen werden soll oder nicht, enthält, wenn die Identifizierungsinformationen eines Administrators des ersten Endgeräts (50a) und die Identifizierungsinformationen eines Administrators des zweiten Endgeräts (50b) dieselben sind.

4. Managementsystem nach Anspruch 2 oder 3, wobei
die Anzeigesteuereinheit (10) konfiguriert ist, den Schirm anzuzeigen, der das Element zum Zuweisen von Informationen, ob die Bestätigung ausgelassen werden soll oder nicht, enthält, wenn die Identifizierungsinformationen des ersten Endgeräts (50a) und die Identifizierungsinformationen des zweiten Endgeräts (50b) teilweise dieselben sind.

5. Managementsystem nach einem der Ansprüche 1 bis 4, wobei
die Anzeigesteuereinheit (10) konfiguriert ist, wenn die Verbindung mit dem Managementsystem durch die Identifizierungsinformationen eines Administrators eingerichtet ist, einen Schirm anzuzeigen, der eine Liste der Endgeräte anzeigt, die mit den Identifizierungsinformationen des Administrators verwaltet werden, und auf dem ersten Endgerät (50a), das in der Liste der Endgeräte enthalten ist, einen Schirm anzuzeigen, der ermöglicht, eine Blockregistrierung mehrerer zweiter Endgeräte (50b), die als ein Ziel spezifizierbar sind, auszuwählen.

6. Managementverfahren, das durch ein Managementsystem durchgeführt wird, das ein oder mehrere erste Endgeräte (50a) und ein oder mehrere zweite Endgeräte (50b) verwaltet, wobei es eine Speichereinheit (40) enthält, die konfiguriert ist, darin Identifizierungsinformationen zum Identifizieren eines ersten und eines zweiten Endgeräts (50a, 50b) derart zu speichern, dass das erste Endgerät (50a) und das zweite Endgerät, das als ein Ziel des ersten Endgeräts (50a) spezifizierbar ist, einander zugeordnet sind, wobei das Managementverfahren Folgendes umfasst:
Durchführen einer Authentifizierung zum Einrichten einer Verbindung mit dem Managementsystem mit den Identifizierungsinformationen des ersten Endgeräts (50a) oder mit den Identifizierungsinformationen eines Administrators durch eine Authentifizierungseinheit (32);
Empfangen einer Anfrage zur Registrierung des zweiten Endgeräts (50b) als ein Ziel des ersten Endgeräts (50a) vom ersten Endgerät (50a) und Übertragen einer Anforderung einer Registrierungsbestätigung an das zweite Endgerät (50b) durch eine Kommunikationseinheit (31), wenn die Authentifizierungseinheit (32) die Authentifizierung zum Einrichten der Verbindung mit dem Managementsystem mit den Identifizierungsinformationen des ersten Endgeräts (50a) durchführt;
Speichern der Identifizierungsinformationen zum Identifizieren des zweiten Endgeräts (50b), als ein Ziel spezifizierbar zu sein, in der Speichereinheit (40) in einer Weise, dass sie den Identifizierungsinformationen zum Identifizieren des ersten Endgeräts (50a) zugeordnet sind, durch eine Speichersteuereinheit (33), wenn die Verbindung mit dem Managementsystem mit den Identifizierungsinformationen des ersten Endgeräts (50a) eingerichtet ist und eine bestätigende Antwort auf die Bestätigungsanfrage vom zweiten Endgerät (50b) empfangen wird,
**gekennzeichnet durch**, wenn die Authentifizierungseinheit (32) das Authentifizieren zum Einrichten der Verbindung mit dem Managementsystem mit den Identifizierungsinformationen eines Administrators durchführt, Empfangen einer Anforderung zur Registrierung des zweiten Endgeräts (50b) als ein Ziel des ersten Endgeräts (50a) von einem Endgerät, das von dem Administrator bedient wird, und Nicht-Übertragen einer Anforderung einer Registrierungsbestätigung an das zweite Endgerät (50b) **durch** die Kommunikationseinheit (31), und
Speichern der Identifizierungsinformationen vor dem Identifizieren des zweiten Endgeräts (50b), als ein Ziel spezifizierbar zu sein, in der Speichereinheit (40) in einer Weise, dass sie den Identifizierungsinformationen zum Identifizieren des ersten Endgeräts (50a) zugeordnet sind, wenn die Verbindung mit dem Managementsystem mit den Identifizierungsinformationen des Endgeräts eingerichtet ist, das von dem Administrator bedient wird, und keine Anforderung einer Registrierungsbestätigung an das zweite Endgerät (50b) übertragen wird.

7. Computerprogrammprodukt, das ein nichtflüchtiges, von einem Computer verwendbares Medium umfasst, das ein Computerprogramm aufweist, das einen Computer, der das Programm ausführt, veranlasst, das Verfahren nach dem vorhergehenden Anspruch durchzuführen.

## Revendications

1. Système de gestion pour la gestion d'un ou plusieurs premiers terminaux (50a) et d'un ou plusieurs terminaux (50b), le système de gestion comprenant :
une unité de stockage (40) conçue pour stocker des informations d'identification pour identifier le premier terminal (50a) de façon à ce qu'un premier terminal (50a) et un deuxième terminal (50b) puissent être spécifiés comme une destination du premier terminal (50a) d'une manière associée ;
une unité d'authentification (32) conçue pour effectuer une authentification pour établir une connexion au système de gestion avec des informations d'identification du premier terminal (50a) ou des informations d'identification d'un administrateur ;
une unité de communication (31) conçue pour recevoir, lorsque l'unité d'authentification (32) effectue une authentification pour établir une connexion au système de gestion avec les informations d'identification du premier terminal (50a), de la part du premier terminal (50a) une requête pour l'enregistrement du deuxième terminal (50b) en tant que destination du premier terminal (50a) et pour transmettre une requête pour une approbation de l'enregistrement dans le deuxième terminal (50b) ; et
une unité de contrôle de stockage (33) conçue pour stocker, dans l'unité de stockage (40), des informations d'identification pour identifier le deuxième terminal (50b) comme pouvant être spécifiés en tant que destination d'une manière associée avec les informations d'identification pour identifier le premier terminal (50a), lorsque la connexion au système de gestion est établie avec les informations d'identification du premier terminal (50a) et une réponse d'approbation à la requête pour approbation est reçue de la part du deuxième terminal (50b),
**caractérisé en ce que**
l'unité de communication (31) est conçue pour recevoir, lorsque l'unité d'authentification (32) effectue une authentification pour établir une connexion au système de gestion avec les informations d'identification d'un administrateur, de la part d'un terminal actionné par l'administrateur, une requête pour l'enregistrement du deuxième terminal (50b) en tant que destination du premier terminal (60a) et pour ne pas transmettre une requête pour approbation de l'enregistrement au deuxième terminal (50b) et
l'unité de contrôle de stockage est conçue pour stocker, dans l'unité de stockage (40), des informations d'identification pour identifier le deuxième terminal (50b) comme pouvant être spécifié en tant que destination d'une manière associée avec les informations d'identification pour identifier le premier terminal (50a), lorsque la connexion au système de gestion est établie avec les informations d'identification du terminal actionné par l'administrateur et une requête pour approbation de l'enregistrement n'est pas transmise au deuxième terminal (50b).

2. Système de gestion selon la revendication 1, comprenant en outre une unité de contrôle d'affichage (10) qui est conçue pour afficher un écran contenant un élément pour désigner une information indiquant si l'approbation doit être omise ou non pour le deuxième terminal lorsque la connexion au système de gestion est établie avec les informations d'identification de l'administrateur.

3. Système de gestion selon la revendication 2, dans lequel l'unité de contrôle d'affichage (10) est conçue pour afficher l'écran contenant l'élément pour désigner si l'approbation doit être omise ou non lorsque les informations d'identification d'un administrateur du premier terminal (50a) et les informations d'identification d'un administrateur du deuxième terminal (50b) sont les mêmes.

4. Système de gestion selon la revendication 2 ou 3, dans lequel
l'unité de contrôle d'affichage (10) est conçue pour afficher l'écran contenant l'élément pour désigner l'information indiquant si l'approbation doit être omise ou non lorsque les informations d'identification du premier terminal (50a) et les informations d'identification du deuxième terminal (50b) sont partiellement les mêmes.

5. Système de gestion selon l'une des revendications 1 à 4, dans lequel
l'unité de contrôle d'affichage (10) est conçue, lorsque la connexion au système de gestion est établie par des informations d'identification d'un administrateur, un écran contenant une liste de terminaux gérés avec les informations d'identification de l'administrateur, et pour afficher, au premier terminal (50a) contenu dans la liste des terminaux, un écran qui permet de sélectionner un enregistrement de bloc d'une pluralité de deuxièmes terminaux (50b) pouvant être spécifiés en tant que destination.

6. Procédé de gestion réalisé par un système de gestion gérant un ou plusieurs premiers terminaux (50a) et un ou plusieurs deuxièmes terminaux (50b) contenant une unité de stockage (40) conçue pour stocker des informations d'identification pour identifier un premier et un deuxième terminaux (50a, 50b) de façon à ce que le premier terminal (50a) et le deuxième terminal (50b) pouvant être spécifiés en tant que destination du premier terminal (50a) soient d'une manière associée, le procédé de gestion comprenant :
par une unité d'authentification (32), la réalisation d'une authentification pour l'établissement d'une connexion au système de gestion avec des informations d'identification du premier terminal (50a) ou des informations d'identification d'un administrateur ;
par une unité de communication (31), la réception, lorsque l'unité d'authentification (32) effectue une authentification pour l'établissement d'une connexion au système de gestion avec les informations d'identification du premier terminal (50a), de la part du premier terminal (50a), d'une requête pour l'enregistrement du deuxième terminal (50b) en tant que destination du premier terminal (50a) et la transmission d'une requête pour approbation de l'enregistrement au deuxième terminal (50b) ;
par une unité de contrôle de stockage (33), le stockage, dans l'unité de stockage (40), d'informations d'identification pour identifier le deuxième terminal (50b) comme pouvant être spécifié en tant que destination d'une manière associée avec les informations d'identification pour identifier le premier terminal (50a), lorsque la connexion au système de gestion est établie avec les informations d'identification du premier terminal (50a) et une réponse d'approbation à la requête pour approbation est reçue de la part du deuxième terminal (50b),
**caractérisé par** l'unité de communication (31) recevant, lorsque l'unité d'authentification (32) effectue une authentification pour établir une connexion au système de gestion avec les informations d'identification d'un administrateur, de la part d'un terminal actionné par l'administrateur, une requête pour l'enregistrement du deuxième terminal (50b) en tant que destination du premier terminal (50a) et ne transmettant pas une requête pour approbation de l'enregistrement du deuxième terminal (50b) et
par l'unité de contrôle de stockage (33), le stockage, dans l'unité de stockage (40), d'informations d'identification avant d'identifier le deuxième terminal (50b) comme pouvant être spécifié en tant que désignation d'une manière associée avec les informations d'identification pour identifier le premier terminal (50a) lorsque la connexion au système de gestion est établie avec les informations d'identification du terminal actionné par l'administrateur et une requête pour approbation pour l'enregistrement n'est pas transmise au deuxième terminal (50b).

7. Produit de programme informatique comprenant un support non transitoire utilisable par un ordinateur ayant un programme informatique qui fait en sorte qu'un ordinateur exécute le programme afin de réaliser le procédé selon la revendication précédente.
